# EUROPEAN PATENT SPECIFICATION

(11) **EP 2 159 077 B1**
(45) Date of publication and mention of the grant of the patent: **28.12.2011**
(21) Application number: 09168505.7
(22) Date of filing: 24.08.2009
(51) Int. Cl.: B60C 9/04

(54) **Modular two-ply tire with directional side plies**
Modularer Zweilagenreigen mit direktionalen Seitenlagen
Pneu modulaire à deux plis avec plis latéraux directionnels

(30) Priority: 29.08.2008 US 201010
(43) Date of publication of application: 03.03.2010
(73) Proprietor: The Goodyear Tire & Rubber Company, Akron, OH 44316-0001 (US)
(72) Inventor: Neubauer, Robert Anthony, Medina, OH 44256 (US); Villanueva, Roel Domingo, Brecksville, Ohio 44141 (US); Trares, Keith Carl, Akron, OH 44319 (US); Nelson, Robert Bernard, Wadsworth, OH 44281 (US); Hubbell, Joseph Kevin, Akron, OH 44313 (US)
(74) Representative: Kutsch, Bernd

(56) References cited:
- EP-A- 0 650 855
- EP-A- 1 475 249
- EP-A- 2 050 585
- DE-A1- 1 921 750
- JP-A- 11 011 109
- NL-A- 8 601 104
- US-A- 3 481 386
- US-A- 3 509 930
- US-A- 3 580 318
- US-A- 4 185 675
- US-A- 5 435 370

## Description

### I. Background of the Invention

### A. Field of Invention

This invention relates to a carcass and a tire comprising a first ply and a second, non-continuous ply, i.e. a modular two-ply carcass or tire..

### B. Description of the Related Art

It is known in the art to provide monoply and two-ply tires for vehicles.

US-B- 7,017,635 discloses a pneumatic tire for trucks having reduced weight and less material usage. The present invention utilizes an outside-in radial ply construction, which aids to torque the tire bead into the rim of the wheel to which it is mounted and allows the rim to provide greater support for the tire.

US-B- 6,536,495 discloses a two-ply radial runflat tire having a belt structure, a ply structure, two inextensible beads and two wedge-insert reinforced sidewalls. The outer ply is reinforced by high-modulus, light-weight aramid. The aramid reinforcement material of the outer ply is clamped around the beads. The outer ply is prestressed in tension during manufacture of the tire.

US-B- 6,263,935 discloses a radial ply pneumatic tire having a carcass with a bead portion, a carcass reinforcing structure, and a bead filler, The carcass reinforcing structure has at least two structures with cords which extend to each bead.

EP-A- 2 050 585 describes a two or three ply tire comprising a continuous radial ply and a second or a second and a third non-continuous ply. The angles of the second and/or third ply on its first or second side respectively are in a range of between +/- approximately 75° to +/- approximately 105°.

US-A- 3,481,386, EP-A- 0 650 855 and US-A- 3,509 930 each describe pneumatic tires comprising a continuous ply and a further non-continuous ply.

EP-A-0 650 855 discloses the features of the preamble of claim 1.

### II. Summary of the Invention

The invention relates to a tire carcass according to claim 1 and to a tire according to claim 2.

Dependent claims refer to preferred embodiments of the invention.

According to another embodiment of this invention, the right side of the second radial ply is at an angle of less than approximately 75° with respect to the center line, and the left side of the second radial ply is at an angle of less than approximately -75° with respect to the center line.

According to one embodiment of this invention, the right side of the second radial ply is at an angle of less than approximately 75° with respect to the center line, and the left side of the second radial ply is at an angle of approximately 90° with respect to the center line.

According to another embodiment of this invention, the right side of the second radial ply is at an angle of approximately 90° with respect to the center line, and the left side of the second radial ply is at an angle of less than approximately - 75° with respect to the center line.

According to another embodiment of this invention, the right side of the second radial ply is at an angle of less than approximately 75° with respect to the center line, and the left side of the second radial ply is at an angle of less than approximately 75° with respect to the center line.

According to another embodiment of this invention, the right side of the second radial ply is at an angle of less than approximately -75° with respect to the center line, and the left side of the second radial ply is at an angle of less than approximately -75° with respect to the center line.

The tire carcass includes a non-continuous third radial ply, the third radial ply having a right side extending from approximately the first edge of the carcass crown portion or overlaying the first edge portion of the carcass crown portion, and extending approximately around the first bead core, and a left side extending from approximately the second edge of the carcass crown portion or overlaying the second edge portion of the carcass crown portion, and extending approximately around the second bead core, the third radial ply overlaying the second radial ply or at least partially overlaying the second radial ply.

According to another embodiment of this invention, the right side of the second radial ply is at an angle of less than approximately 75° with respect to the center line, the left side of the second radial ply is at an angle of less than approximately -75° with respect to the center line, the right side of the third radial ply is at an angle of less than approximately 75° with respect to the center line, the left side of the third radial ply is at an angle of less than approximately -75° with respect to the center line.

According to another embodiment of this invention, the right side of the second radial ply is at an angle chosen from the group consisting of: less than approximately 75°, less than approximately -75°, and approximately 90°, the left side of the second radial ply is at an angle chosen from the group consisting of: less than approximately 75°, less than approximately -75°, and approximately 90°, wherein the right side of the third radial ply is at an angle chosen from the group consisting of: less than approximately 75°, less than approximately -75°, and approximately 90°, the left side of the third radial ply is at an angle chosen from the group consisting of: less than approximately 75°, less than approximately -75°.

One advantage of this invention is that the turndown and turnup may be biased in angle against each other, providing improved lateral stiffness. This also allows a reduction in the apex gage or possibly to totally eliminate the apex, if needed.

Another advantage of this invention is that it allows a footprint shape tuning of the tire.

Yet another possible advantage of this invention is that it allows for changing of the tire's springrate.

Yet another possible advantage of this invention is that it allows for easily changing the tire's ride and handling performance depending to required performance parameters.

Another possible advantage of this invention is that it affects the rolling resistance of the tire and provides additional design options and design parameters to improve the rolling resistance of the tire.

With the plies split in three segments, one center or bridge ply, and two outer or side ply segments forming the non-continuous ply, the tire designer can now angle the side plies for additional tuning to gain performance characteristics as well as possible weight savings.

### III. Brief Description of the Drawings

The invention may take physical form in certain parts and arrangement of parts, embodiments of which will be described in detail in this specification and illustrated in the accompanying drawings which form a part hereof and wherein:
FIGURE 1 is a cross-section of the ply section of a tire showing a two-ply construction (Comparative Example).
FIGURE 2 is a cross-section of the ply-section of a tire, showing belts and the two-ply construction (Comparative Example).
FIGURE 3 is a cross-section of the ply-section of a tire, showing the three-ply construction;
FIGURE 4 is a top view of the carcass, showing angles of the plies;
FIGURE 5 is a top view of the carcass, showing angles of the plies;
FIGURE 6 is a top view of the carcass, showing angles of the plies;
FIGURE 7 is a top view of the carcass, showing angles of the plies; and,

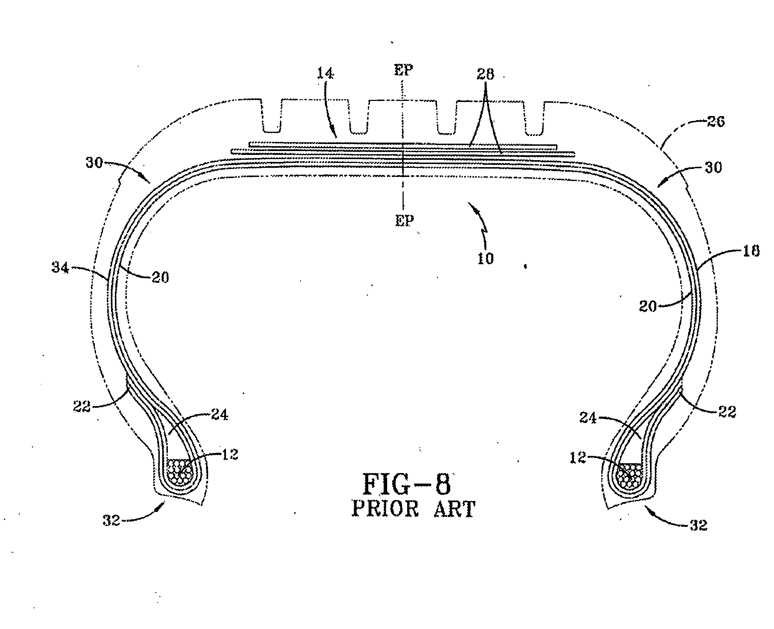

FIGURE 8 is a perspective view of a prior art two-ply tire.

### IV. Definitions

The following terms may be used throughout the descriptions presented herein and should generally be given the following meaning unless contradicted or elaborated upon by other descriptions set forth herein.

"Axial" and "axially" mean the lines or directions that are parallel to the axis of rotation of the tire.

"Carcass" means the tire structure apart from the belt structure, tread, undertread, and sidewall rubber over the plies, but including bead cores.

"Carcass crown portion" means the portion of the carcass over which the crown is placed.

"Crown" or "tire crown" means the tread and tread shoulders. The term "crown" may also include the immediately adjacent portions of the sidewalls, often referred to as "wings".

"Radial" and "radially" mean directions toward or away from the axis of rotation of the tire.

"Sidewall" means that component which comprises a portion of the outside surface of a tire between the tread and the bead.

### V. Detailed Description of the Invention

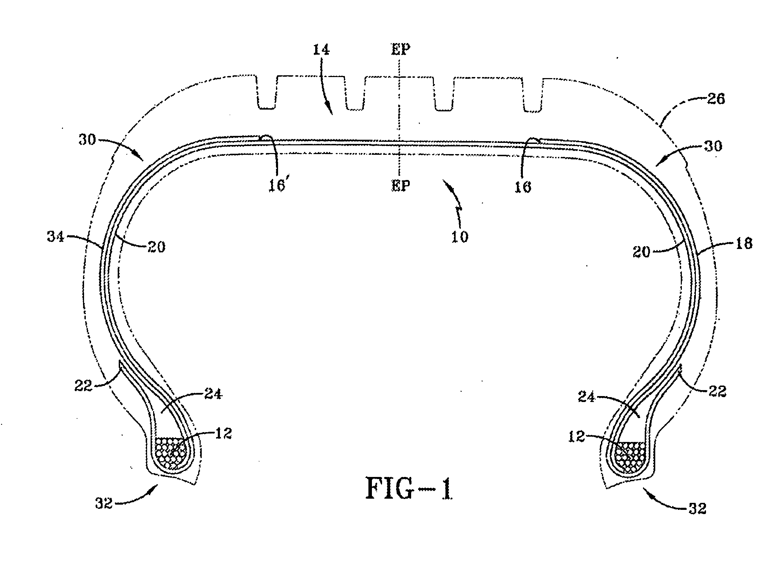

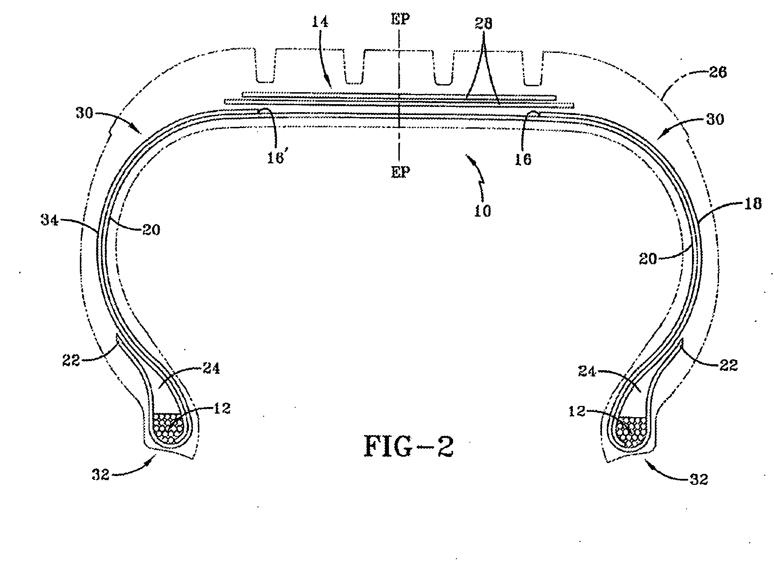

FIGURE 1 shows a tire carcass 10 (Comparative Example), having two beards 12, a carcass crown portion 14 (wherein the carcass crown portion 14 has two edges 16, 16'), a first radial ply 20, a second radial ply having a right side 18 and a left side 34, tum-up ends 22, apexes 24, shoulders 30, and bead regions 32. The bead regions 32 have a pair of axially spaced beads 12 around which are wrapped tum-up ends 22. The apexes 24 are sandwiched between the main body of the carcass 10 and the tum-up ends 22. The carcass 10 is surrounded by tread 26. In FIGURES 2-4, the carcass 10 is shown with optional belts 28 overlaying the carcass crown portion 14 and a tread 26 overlaying the carcass crown portion 14.

With continuing reference to FIGURES 1 and 2, the first, preferably radial ply 20 is a continuous ply that has shoulders 30 and extends around the beads 12 and ends in turn-up ends 22. The carcass crown portion 14 is defined by the edges 16, 16', and the right side 18 of a second, preferably radial ply and the left side 34 of the second, preferably radial ply begin at the edges 16, 16', and extend downwardly toward the beads 12. The right and left sides 18, 34 of the second ply overlay the first ply 20, such that the sidewall region of the carcass 10 is two-ply in this embodiment.

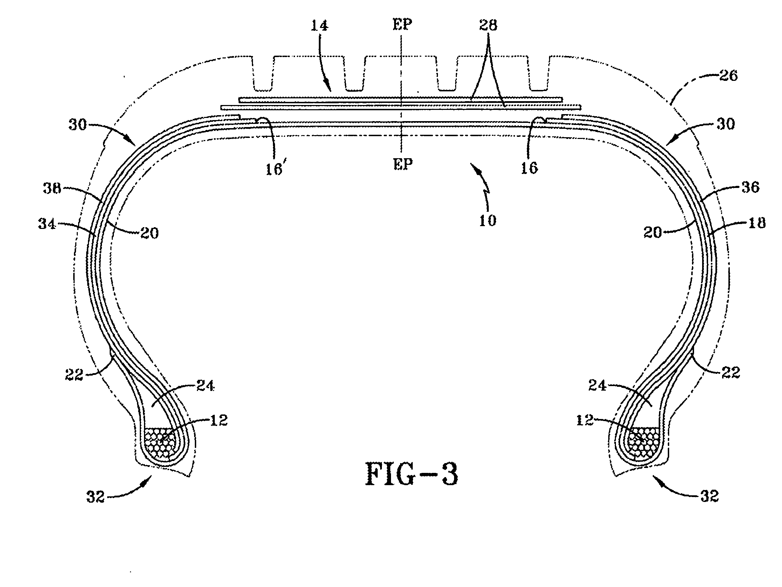

With reference now to FIGURE 3, an embodiment of the invention is shown, wherein the carcass 10 has a third preferably radial ply having a right side 36, which preferably begins at the first edge 16 or close to the first edge 16 of the crown carcass portion 14, at least partially overlays the right side 18 of the second ply, and extends downwardly to the bead 12. The left side 38 of the third ply, which preferably begins at the second edge 16' or close to the second edge 16' of the crown carcass portion 14, at least partially overlays the left side 34 of the second ply, and extends downwardly to the bead 12. The configuration in this embodiment creates a three-ply construction on the sidewalls. As can be seen in FIGURE 3, in one embodiment, the sides 36, 38 of the third ply overlay the second radial ply in a staggered fashion. The third radial ply is slightly shorter than the second radial ply. The plies are preferably also staggered at the bead regions 32 as well.

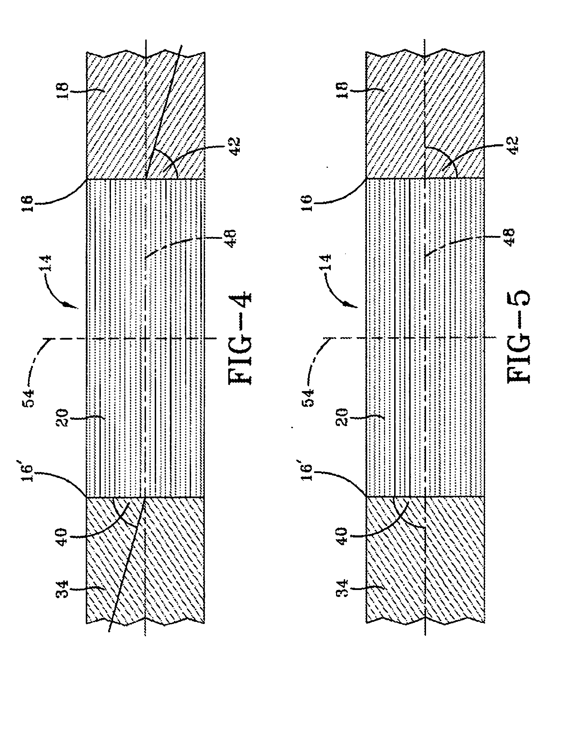

With reference now to FIGURES 4 and 5, the FIGURES show the tire carcass 10 from the top, showing the angles of the plies.

In this application, these angles always refer to the parallel cords in the respective plies used as reinforcement therein.

The sides 18, 34 or, more precise, the direction of the parallel cords in the respective side or ply can be at a variety of angles. The rights side 18 has a first edge and the left side 34 has a first edge. A centerline 48 is shown in the FIGURES, and the angles 40, 42 are shown with respect to a line 54 perpendicular to this centerline 48. In one embodiment, the angles 40, 42 are -75° and 75°, respectively, with respect to the line 54. The angles 40, 42 represent the angle of the sides 18, 34. In another embodiment, the angles 40, 42 are both 90° with respect to the line 54. It is to be understood that in this embodiment, angles 40, 42 can be any angle of less than approximately -75°, approximately 90°, or less than approximately 75°. It is also to be understood that the angles 40, 42 can be any combination of the above angles. The FIGURES also show the perpendicular line 54 which is parallel to the equatorial plane EP of the carcass 10.

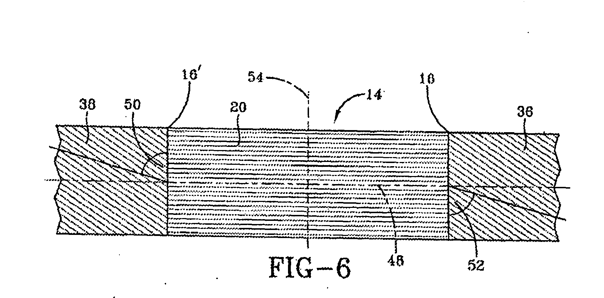

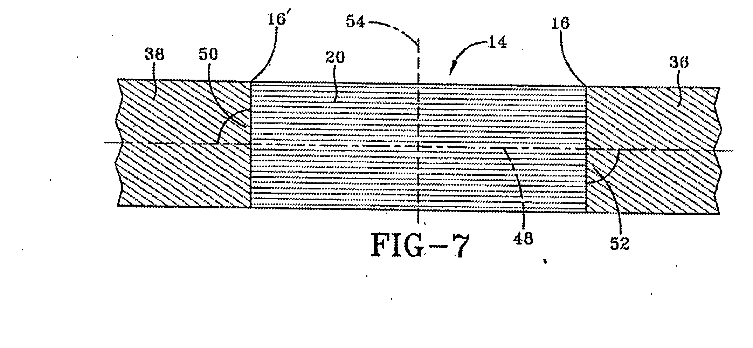

With reference now to FIGURES 6 and 7, the sides 36, 38 of the third ply 30 can be at a variety of angles. The right side 36 has a first edge and the left side 38 has a first edge. A centerline 48 is shown in the FIGURES, and the angles 50, 52 are shown with respect to the line 54 perpendicular to the centerline 48. In one embodiment, the angles 50, 52 are -75° and 75°, respectively, with respect to the line 54. Again, the angles refer to the angles the respective parallel cords in the respective ply or ply segment make with the line 54. The angles 50, 52 represent the angle of the sides 36, 38. In another embodiment, the angles 50, 52 are both 90° with respect to the line 54. It is to be understood that in this embodiment, angles 50, 52 can be any angle of less than approximately -75°, approximately 90°, or less than approximately 75°. It is also to be understood that the angles 50, 52 can be any combination of the above angles. With reference now to FIGURES 1-7, the plies can be made of either similar or dissimilar materials, but the type of material is not intended to be a limitation to this invention, and it is to be understood that the plies could be made of any material chosen using sound engineering judgment. In one embodiment, the material of the first ply 20 is dissimilar to the material of at least one side 18, 34 of the second ply.

In another embodiment, the material of the first ply 20 is dissimilar to the material of both sides 18, 34 of the second ply. Dissimilar material hereby means preferably that the rubber composition of the respective plies and/or the cord construction or the cord density of the reinforcement material used in the respective ply are different.

With continuing reference to FIGURES 1-7, it is to be understood that the plies can be of any length, including extending to the turn-up ends 22, as long as the sides 18, 34 do not connect to each other and sides 36, 38 do not connect to each other. It is also to be understood that the invention is not limited to three plies, but any number of plies could be used, as long as chosen using sound engineering judgment. It is also to be understood that the tire could have two or more continuous plies and two or more non-continuous plies. It is also to be understood that the sides 18, 34 of the second ply and the sides 36, 38 of the third ply, in one embodiment, do not wrap around the bead core 12, but extend to the bead core 12. The sides 18, 34, 36, 38 can extend to the bead core 12, partially around the bead core 12, or all the way around the bead core 12. It is also to be understood that the sides 18, 34, 36, 38 can extend beyond the edges 16, 16' of the carcass crown portion 14. Although in one embodiment, the sides 18, 34, 36, 38 begin at approximately the edge 16, 16', it is to be understood that this invention encompasses the sides 18, 34, 36, 38 extending substantially beyond the edges 16, 16' as long as the second and third plies do not become a continuous ply.

## Claims

1. A tire carcass comprising a first radial ply (20) with shoulder portions and lateral edge portions, each of the lateral edge portions being wrapped around a bead core (12); a center line (54) parallel to the bead cores (12) and parallel the equatorial plane (EP) of the carcass (10); a carcass crown portion, (14), the carcass crown portion having a first edge (16) and a second edge (16'); at least one non-continuous second ply (18, 34), the at least one non-continuous second ply having a right side (18) extending from the carcass crown portion (14) to or around a first bead core (12) and a left side (34) extending from the carcass crown portion (14) to or around a second bead core (12); **characterized in that** the tire carcass comprises at least one non-continuous third ply (36, 38), the at least one non-continuous third ply having a right side (36) extending from the carcass crown portion (14) to or around the first bead core (12) and a left side (38) extending from the carcass crown portion (14) to or around the second bead core (12), the at least one non-continuous third ply (36, 38) overlaying or partially overlaying the non-continuous second radial ply (18, 34); wherein the right side (18) of the non-continuous second ply is at an angle selected from the group of angles consisting of (i) less than 75° and less than approximately 75° with respect to the center line (54) or (ii) less than -75° and less than approximately -75° with respect to the center line (54) or (iii) 90° or 90° +/- 5° or less than 85° with respect to the center line (54); the left side (34) of the non-continuous second ply is at an angle selected from the group of angles consisting of (i) less than 75° and less than approximately 75° with respect to the center line (54) or (ii) less than -75° and less than approximately -75° with respect to the center line (54), or (iii) 90° or 90° +/- 5° or less than 85° with respect to the center line (54); and wherein at least one of the angles of the right side (18, 36) or the left side (34, 38) of the non-continuous second ply or the non-continuous third ply is selected from the group of angles consisting of (i) less than 75° and less than approximately 75° with respect to the center line (54) or (ii) less than -75° and less than approximately -75° with respect to the center line (54).

2. A pneumatic tire comprising a tire carcass in accordance with claim 1 and a tread (26).

3. The tire of claim 2 further comprising a belt structure (28).

## Patentansprüche

1. Reifenkarkasse, umfassend eine erste radiale Lage (20) mit Schulterabschnitten und seitlichen Randabschnitten, wobei jeder der seitlichen Randabschnitte um einen Wulstkern (12) gewickelt ist; eine Mittellinie (54) parallel zu den Wulstkernen (12) und parallel zu der Äquatorialebene (EP) der Karkasse (10); einen Karkasskronenabschnitt (14), wobei der Karkasskronenabschnitt einen ersten Rand (16) und einen zweiten Rand (16') aufweist; zumindest eine nicht durchgehende zweite Lage (18, 34), wobei die zumindest eine nicht durchgehende zweite Lage eine rechte Seite (18) aufweist, die sich von dem Karkasskronenabschnitt (14) zu oder um einen ersten Wulstkern (12) erstreckt, und eine linke Seite (34), die sich von dem Karkasskronenabschnitt (14) zu oder um einen zweiten Wulstkern (12) erstreckt;
**dadurch gekennzeichnet , dass** die Reifenkarkasse zumindest eine nicht durchgehende dritte Lage (36, 38) umfasst, wobei die zumindest eine nicht durchgehende dritte Lage eine rechte Seite (36) aufweist, die sich von dem Karkasskronenabschnitt (14) zu oder um den ersten Wulstkern (12) erstreckt, und eine linke Seite (38), die sich von dem Karkasskronenabschnitt (14) zu oder um den zweiten Wulstkern (12) erstreckt, wobei die zumindest eine nicht durchgehende dritte Lage (36, 38) über oder teilweise über der nicht durchgehenden zweiten radialen Lage (18, 34) liegt; wobei die rechte Seite (18) der nicht durchgehenden zweiten Lage unter einem Winkel liegt, der aus der Gruppe von Winkeln ausgewählt ist, die besteht aus (i) weniger als 75° und weniger als annähernd 75° mit Bezug auf die Mittellinie (54) oder (ii) weniger als -75° und weniger als annähernd -75° mit Bezug auf die Mittellinie (54) oder (iii) 90° oder 90° +/- 5° oder weniger als 85° mit Bezug auf die Mittellinie (54); wobei die linke Seite (34) der nicht durchgehenden zweiten Lage unter einem Winkel liegt, der aus der Gruppe von Winkeln ausgewählt ist, die besteht aus (i) weniger als 75° und weniger als annähernd 75° mit Bezug auf die Mittellinie (54) oder (ii) weniger als -75° und weniger als annähernd -75 ° mit Bezug auf die Mittellinie (54), oder (iii) 90° oder 90° +/- 5° oder weniger als 85° mit Bezug auf die Mittellinie (54); und wobei zumindest einer der Winkel der rechten Seite (18, 36) oder der linken Seite (34, 38) der nicht durchgehenden zweiten Lage oder der nicht durchgehenden dritten Lage aus der Gruppe von Winkeln ausgewählt ist, die besteht aus (i) weniger als 75° und weniger als annähernd 75° mit Bezug auf die Mittellinie (54) oder (ii) weniger als -75° und weniger als annähernd -75° mit Bezug auf die Mittellinie (54).

2. Luftreifen mit einer Reifenkarkasse nach Anspruch 1 und einer Lauffläche (26).

3. Reifen nach Anspruch 2,
der ferner eine Gürtelstruktur (28) umfasst.

## Revendications

1. Carcasse de bandage pneumatique comprenant une première nappe radiale (20) comportant des portions d'épaulement et des portions marginales latérales, chacune des portions marginales latérales venant s'enrouler autour d'une tringle de talon (12) ; une ligne médiane (54) parallèle aux tringles de talons (12) et parallèle au plan équatorial (EP) de la carcasse (10) ; une portion de sommet de carcasse (14), la portion de sommet de carcasse possédant un premier bord (16) et un deuxième bord (16') ; au moins une deuxième nappe non-continue (18, 34), ladite au moins une deuxième nappe non-continue possédant un côté droit (18) s'étendant depuis la portion de sommet de carcasse (14) jusqu'à une première tringle de talon (12) ou jusqu'à un endroit situé autour de ladite tringle de talon, et un côté gauche (34) s'étendant depuis la portion de sommet de carcasse (14) jusqu'à une deuxième tringle de talon (12) ou jusqu'à un endroit situé autour de ladite tringle de talon, **caractérisée en ce que** la carcasse du bandage pneumatique comprend au moins une troisième nappe non-continue (36, 38), ladite au moins une troisième nappe non-continue possédant un côté droit (36) s'étendant depuis la portion de sommet de carcasse (14) jusqu'à une première tringle de talon (12) ou jusqu'à un endroit situé autour de ladite tringle de talon, et un côté gauche (38) s'étendant depuis la portion de sommet de carcasse (14) jusqu'à une deuxième tringle de talon (12) ou jusqu'à un endroit situé autour de ladite tringle de talon, ladite au moins une troisième nappe non-continue (36, 38) recouvrant ou recouvrant partiellement ladite deuxième nappe radiale non-continue (18, 34) ; le côté droit (18) de la deuxième nappe non-continue formant un angle choisi parmi le groupe d'angles constitués par (i) un angle inférieur à 75° et inférieur à approximativement 75° par rapport à la ligne médiane (54) ou (ii) un angle inférieur à -75° et inférieur à approximativement -75° par rapport à la ligne médiane (54) ou (iii) un angle de 90 ° ou de 90 ° ± 5 ° ou inférieur à 85 ° par rapport à la ligne médiane (54) ; le côté gauche (34) de la deuxième nappe non-continue formant un angle choisi parmi le groupe d'angles constitués par (i) un angle inférieur à 75° et inférieur à approximativement 75° par rapport à la ligne médiane (54) ou (ii) un angle inférieur à -75 ° et inférieur à approximativement -75° par rapport à la ligne médiane (54) ou (iii) un angle de 90° ou de 90° ± 5° ou inférieur à 85° par rapport à la ligne médiane (54) ; et dans lequel au moins un angle choisi par les angles formés par le côté droit (18, 36) et les angles formés par le côté gauche (34, 38) de la deuxième nappe non-continue ou de la troisième nappe non-continue est choisi parmi le groupe d'angles constitués par (i) un angle inférieur à 75° et inférieur à approximativement 75° par rapport à la ligne médiane (54) ou (ii) un angle inférieur à -75° et inférieur à approximativement -75° par rapport à la ligne médiane (54).

2. Bandage pneumatique comprenant une carcasse de bandage pneumatique selon la revendication 1, et une bande de roulement (26).

3. Bandage pneumatique selon la revendication 2, comprenant une structure de ceintures (28).
